Europäisches Patentamt

European Patent Office

Office européen des brevets

(11) Publication number: **0 300 172**
**A2**

(12) # EUROPEAN PATENT APPLICATION

(21) Application number: **88108631.8**

(51) Int. Cl.⁴: **B23B 27/16**

(22) Date of filing: **30.05.88**

(30) Priority: **24.07.87 US 77259**

(43) Date of publication of application:
**25.01.89 Bulletin 89/04**

(84) Designated Contracting States:
**DE FR GB IT SE**

(71) Applicant: **GTE VALENITE CORPORATION**
**750 Stephenson Highway**
**Troy Michigan 48007-3950(US)**

(72) Inventor: **Stashko, Daniel R.**
**10600 Pine Hill Dr.**
**Holly, MI 48442(US)**

(74) Representative: **Patentanwälte Grünecker,**
**Kinkeldey, Stockmair & Partner**
**Maximilianstrasse 58**
**D-8000 München 22(DE)**

(54) **Device to prevent rotation of round cutting tool inserts.**

(57) A round insert cutting tool including a positive locking means to prevent rotation from tangential cutting forces comprising a recess in the seated face of the insert having arcuate projection engagement with an offset lockpin anchored in the insert seat of the holder.

FIG.1

## DEVICE TO PREVENT ROTATION OF ROUND CUTTING TOOL INSERTS

### BACKGROUND OF THE INVENTION

Round inserts are commonly used in cutting tools. Any of three methods of insert retention or a combination thereof is normally used: screw down, pin lock or top clamp. In all of such methods, friction is depended upon to retain the insert against rotation induced by cutting forces. Under certain conditions, cutting forces may cause round inserts to rotate in their pockets usually leading to failure. While it is clear that a positive lock against rotation would be desirable, only frictional retention has been available in commercial constructions known in the art.

### BRIEF DESCRIPTION OF THE PRESENT INVENTION

A positive lock is provided by a recess in the bottom of the insert, having radial arcuate projections which are engaged by a pin anchored in the insert seat. As applied to round inserts having parallel cutting and seating faces with a positive rake side wall engaging an arcuate pocket shoulder, the recess is substantially smaller than the bottom face leaving a perimeter for seat engagement which will provide full strength for the cutting wall under compressive stress. The depth of the recess is sufficient, but no greater than required for transmitting effective sheer loads to the locking pin with allowance for top clearance.

The recess may be in the form of a polygon with rounded corners indexable to a number of index positions equal to the number of polygon faces. It is also possible to provide a large number of index positions by using a circular recess with adjacent perimeter grooves having radii equal to the locking pin radius, the cusp between adjacent grooves serving as the positive lock. The arcuate pin/groove engagement may be in a range up to 180°, with the minimum arc sufficient to provide a freely unlocking rather than wedging angle to facilitate insert removal and indexing.

The effective angle of resistance to insert rotation at the extremity of locking pin contact with each arcuate groove will be equal to 1/2 of the arc of contact of the pin minus the angle of the arc extending between a radial line of the cutter passing through the center of the locking pin and a line extending from the insert center to the extremity point of contact with the locking pin.

### BRIEF DESCRIPTION OF THE DRAWINGS

Fig. 1 is a face view of a round insert with a square recess installed in a cutting tool;

Fig. 2 is a sectional view taken along the line 2-2 of Fig. 1;

Fig. 3 is a perspective view showing the anti-rotation recess in the bottom of the insert;

Fig. 4 is a diagrammatic view illustrating 20 index positions established with arcuate grooves spaced at 18° intervals;

Fig. 5 is a similar diagrammatic view illustrating 18 index positions with 20° spacing;

Fig. 6 is a similar diagrammatic view illustrating 15 index positions with 24° spacing.

### DETAILED DESCRIPTION OF PREFERRED EMBODIMENTS

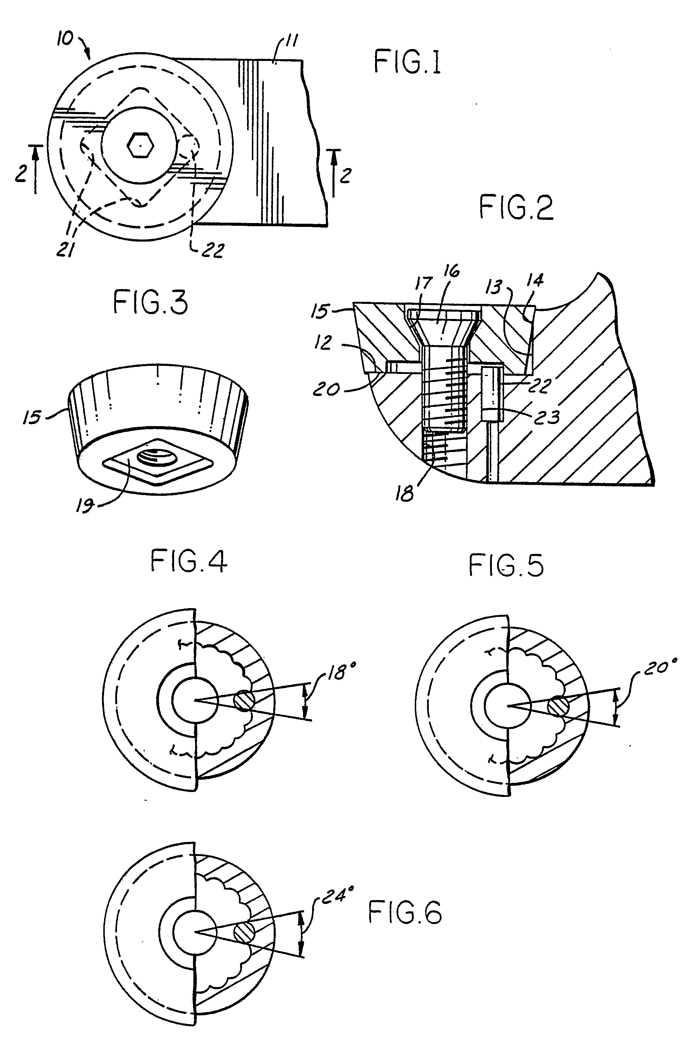

With reference to Figs. 1, 2 and 3. the principle of the invention is illustrated by circular positive rake insert 10 installed in cutting tool holder 11 having insert seat 12 extending to cylindrical cavity wall 13 with conical surface 14 for engaging matching conical cutter wall 15. Insert 10 is secured by conventional hold-down screw 16, engaging conical central insert aperture 17, threaded into slightly offset tapped hole 18 to force insert 10 into firm shoulder engagement at conical surface 14.

The invention is illustrated by a square recess 19 formed in bottom insert face 20 having four 90° arcuate corners 21 engageable with locking pin 22 press fit in aperture 23 in holder 11 and projecting into recess 19 sufficiently to provide positive engagement with any recess corner 21 locking insert 10 against rotation from tangential component cutting forces.

While only four index positions are available for the square recess shown. additional index positions may be provided with pentagon, hexagon etc ..., recesses with corresponding lockpin engagement corner arcs successively reduced from 90° for the square to 72°, 60° etc ..., (360° number of sides) with increasing number of sides.

As previously indicated, the effective angle of contact for resisting rotation at the extremity of pin engagement will be equal to 1/2 the total arc of contact minus the angle between the line passing through the insert and lockpin centers and the insert radial line passing through the extremity of lockpin engagement; e. g., for hexagon where the angle of engagement is 60° and the lockpin radius is 1/4 the distance between centers, the theoretical effective angle at the extremity of engagement with no lost motion is approximately 24°. However, any clearance and resulting lost motion between pin and corner radius will decrease such effective angle.

Accordingly, the limiting factor in maximizing the number of index positions with a polygon rounded corner recess, in order to maintain the effective angle at the extremity of contact greater than the wedging angle of friction, must include allowance for any clearance and lost motion. As a practical matter, while 20° indexing increments with 18 polygon sides and index positions could theoretically be provided within the foregoing parameters of lockpin radius and center distance including an 8° no- clearance effective angle, any clearance would produce an effective wedging angle if not a completely bypassing condition of the polygon flats.

On the other hand, the alternative approach of providing circular arcuate grooves with intersecting extremities in the perimeter of a circular recess results in a greater effective angle opposing rotation as indicated by the following examples.

With reference to Figs. 4, using the same parameter of 1/4 ratio of pin radius to distance between centers, 20 index positions can be provided with an arc of contact over 95° and a no-clearance effective angle of almost 38°.

With reference to Fig. 5, 18 index positions can be provided with 108° arc of contact and 44° no-clearance effective angle.

With reference to Fig. 6, 15 index positions can be provided with 136° arc of contact and 56° no-clearance effective angle.

Any fewer than 15 index positions could be provided with 180° arc of contact having nonintersecting extremities.

In order to further maximize index positions, a minimal lockpin diameter having adequate sheer strength to resist tangential rotational forces on the insert render it possible to provide substantially as many index positions as could ever be used.

## Claims

1. A cutting tool comprising a holder having an insert seat, a round insert having parallel cutting and seating faces secured on said seat, and positive means for preventing rotation of said insert on said seat characterized by a concentric polygonal recess in said seating face having a plurality of engageable radial projections and a means anchored in said insert seat positioned to engage any projection of said recess in an insert indexed position.

2. The cutting tool of claim 1 further characterized by cylindrical pin and matching cylindrical arcuate projections.

3. The cutting tool of claim 2 further characterized by continuous seating perimeter of said seating face, extending outside of said recess engaging said insert seat.

4. The cutting tool of claim 3 including an arcuate wall of said holder engaging a side wall of said insert, a central aperture in said insert, and an offset hold down screw extending through said insert into a threaded aperture in said holder for securing said insert on said seat against said arcuate wall, said pin being anchored between said hold down screw and said arcuate wall.

5. The cutting tool of claim 4 wherein the perimeter wall of said recess extends normal to said seat.

6. The cutting tool of claim 5 wherein said pin radius comprises a minor fraction of its center distance from the axis of said insert.

7. The cutting tool of claim 6 wherein said recess has a polygonal perimeter with arcuate corners tangent to the polygon sides.

8. The cutting tool of claim 6 wherein said recess has a generally circular configuration with the arcuate projection extremities of adjacent projections intersecting in a nonlinear angle.

9. The cutting tool of claim 8 wherein the intersecting projection terminate at an effective angle relative to circumferential direction exceeding the effective angle of friction for the materials involved in the pin and insert construction.

10. The cutting tool of claim 9 wherein the perimeter of said recess is in the form of a plurality of circular arcuate grooves having an extension within a range exceeding the angle of friction and less than 180°.

11. The cutting tool of claim 6 wherein said recess has a generally circular configuration with radially extending peripheral grooves comprising said cylindrical arcuate projections.

FIG.1

FIG.2

FIG.3

FIG.4

FIG.5

FIG.6